# EUROPEAN PATENT APPLICATION

(11) **EP 4 663 289 A1**
(43) Date of publication of application: **17.12.2025**
(21) Application number: 24753519.8
(22) Date of filing: 25.01.2024
(51) Int. Cl.: B01J 20/30, B01J 20/04, B01J 20/08, B01J 20/06, B01J 20/20, B01J 20/12, B01D 53/14

(54) **CARBON DIOXIDE DRY ABSORBENT FOR FIXED BED REACTOR OF SHIP AND MANUFACTURING METHOD THEREFOR**

(30) Priority: 06.02.2023 KR 20230015679
(71) Applicant: Cool Earth Co., Ltd., Busan 46742 (KR)
(72) Inventor: JUNG, Young Rock, Busan 46753 (KR); MYUNG, So Young, Busan 07210 (KR)
(74) Representative: Plasseraud IP
(86) International application number: PCT/KR2024/001213
(87) International publication number: WO 2024/167189

(57) **Abstract**

Disclosed are a dry carbon dioxide absorbent for a fixed-bed reactor of a ship, suitable for use in a fixed-bed reactor of a ship, which includes regeneration of a carbon dioxide adsorbent using exhaust gas waste heat of a ship, capable of effectively separating carbon dioxide after regeneration by generating steam using exhaust gas waste heat of a ship engine under the spatially limited conditions of a ship and directly applying the steam thus generated as a regeneration energy source, compared to a conventional carbon dioxide adsorption system that essentially requires a process of regenerating an adsorbent by depressurization or heating in order to desorb carbon dioxide after adsorption at room temperature, and a method of manufacturing the same.

## Description

### [Technical Field]

The present invention relates to a dry carbon dioxide absorbent for a fixed-bed reactor of a ship and a method of manufacturing the same, and more particularly to a dry carbon dioxide absorbent for a fixed-bed reactor of a ship, suitable for use in a fixed-bed reactor of a ship, which includes regeneration of a carbon dioxide adsorbent using exhaust gas waste heat of a ship, capable of effectively separating carbon dioxide after regeneration by generating steam using exhaust gas waste heat of a ship engine under the spatially limited conditions of a ship and directly applying the steam thus generated as a regeneration energy source, compared to a conventional carbon dioxide adsorption system that essentially requires a process of regenerating an adsorbent by depressurization or heating in order to desorb carbon dioxide after adsorption at room temperature, and to a method of manufacturing the same.

### [Background Art]

Carbon dioxide emitted through various routes across industries has negative impacts on the environment, such as changing ecosystems and temperatures, so various capture methods thereof have been proposed.

Although a wet process for capturing carbon dioxide using a liquid absorbent has been employed conventionally, wastewater may be generated during the process, which is undesirable. Hence, a method of capturing carbon dioxide by a dry process as an alternative to the wet process has been devised. The dry process is carried out through the stages of absorbing carbon dioxide by allowing a mixed gas discharged from a boiler, etc. of a thermal power plant to react with a dry absorbent, separating the mixed gas from which carbon dioxide is removed and the dry absorbent on which carbon dioxide is absorbed from each other, and regenerating the dry absorbent on which carbon dioxide is absorbed by separating carbon dioxide therefrom by heating. The dry absorbent from which carbon dioxide is separated during regeneration is fed back to the absorption process stage to absorb carbon dioxide, and the captured carbon dioxide is used in other industrial facilities or buried deep underground for disposal.

Combustion engines such as engines, boilers, etc. provided to ships generate exhaust gas by combustion. Exhaust gas generated from combustion engines contains large amounts of air pollutants such as nitrogen oxides (NOx), sulfur oxides (SO_{X}), carbon dioxide (CO₂), and dust.

In particular, nitrogen oxides and sulfur oxides contained in exhaust gas emitted from ships are representative air pollutants undergoing emission regulations by the International Maritime Organization (IMO), an organization under the United Nations (UN).

Methods of reducing sulfur oxides in exhaust gas include methods of preventing sulfur oxides from being generated during combustion by removing sulfur components from fuel or using fuel that does not contain sulfur components as fuel for combustion engines, and posttreatment methods in which sulfur oxides in exhaust gas are captured by spraying a cleaning solution (e.g., seawater, etc.) onto the exhaust gas during the process of supplying the exhaust gas to a scrubber followed by passing therethrough.

In addition, methods of reducing nitrogen oxides in exhaust gas include selective catalytic reduction (SCR) or exhaust gas recirculation (EGR) systems as known. Selective catalytic reduction is a method of removing nitrogen oxides by converting nitrogen oxides into nitrogen and water using a catalyst injected with a reducing agent such as ammonia or urea, and the exhaust gas recirculation system reduces the amount of nitrogen oxides generated by supplying some of exhaust gas emitted from an engine to an engine cylinder via intake port to lower the combustion temperature of the engine.

Various techniques are being applied to reduce carbon dioxide emissions from exhaust gas generated from ships. However, known carbon dioxide capture methods have the disadvantage of consuming a lot of heat energy to heat the absorbent on which carbon dioxide is absorbed in the regeneration process stage. Furthermore, in the absorption process, unnecessary side reaction occurs in addition to absorption reaction, and due to thermodynamic characteristics of regeneration reaction, the regeneration process has to be carried out at a temperature of 150°C to 600°C (varying depending on the type of dry absorbent) to completely restore the dry absorbent to the original state thereof. However, since there is a problem with temperature control due to thermodynamic equilibrium of absorption reaction and regeneration reaction and heat energy of steam is used as a regeneration heat source in a general regeneration process, the process proceeds at a temperature of 150-200°C, so the dry absorbent, in which only a portion is regenerated and the remainder is not restored to the original state thereof, is fed back to the absorption process stage.

Korean Patent Application Publication No. 10-2015-0127939 discloses a method of manufacturing a dry lithium silicate carbon dioxide absorbent, including forming a mixed aqueous solution by mixing a lithium precursor and colloidal silica, obtaining a lithium silicate solid in which Li₄SiO₄ and Li₂SiO₃ coexist by drying the mixed aqueous solution at a temperature of 30 to 90°C, and obtaining a final product in which Li₄SiO₄ acts as an active ingredient and Li₂SiO₃ serves as a support between Li₄SiO₄ structures by calcining the lithium silicate solid. However, there has been no disclosure regarding technology for a dry carbon dioxide absorbent for a fixed-bed reactor of a ship, which includes activated carbon and clay, with excellent formability and ease of manufacture for use in a fixed-bed reactor, and a method of manufacturing the same.

Korean Patent Application Publication No. 10-2013-0034993 discloses a carbon dioxide absorbent composition including an active ingredient, a support, an inorganic binder, and a regeneration promoter containing at least one selected from the group consisting of lithium hydroxide, potassium hydroxide, sodium hydroxide, magnesium hydroxide, sodium carbonate, potassium carbonate, sodium bicarbonate, and potassium bicarbonate. However, there has been no disclosure regarding technology for a dry carbon dioxide absorbent for a fixed-bed reactor of a ship with high absorption capacity and a method of manufacturing the same.

Korean Patent Application Publication No. 10-2022-0146871 discloses a composition for a carbon dioxide absorbent, including an active material including potassium carbonate (K₂CO₃), a support, and an inorganic binder, in which the support includes alpha-alumina (α-alumina), titanium dioxide (TiO₂), zirconium dioxide (ZrO₂), and modified bentonite, the inorganic binder includes pseudo-boehmite and calcium silicate, and the composition includes 30 to 40 wt% of the active material, 10 to 30 wt% of alpha-alumina, 5 to 15 wt% of titanium dioxide, 5 to 25 wt% of zirconium dioxide, 3 to 9 wt% of modified bentonite, 2 to 6 wt% of pseudo-boehmite, and 4 to 8 wt% of calcium silicate based on the total weight of the composition. However, there has been no disclosure regarding technology for a dry carbon dioxide absorbent for a fixed-bed reactor of a ship with high absorption capacity and a method of manufacturing the same.

Korean Patent Application Publication No. 10-2015-0125880 discloses a carbon dioxide absorbent, including a support made of an inorganic oxide and an active ingredient supported on the support as a eutectic mixture, in which the eutectic mixture is selected from the group consisting of at least one alkali metal-containing compound, at least one alkaline earth metal-containing compound, and combinations thereof. However, there has been no disclosure regarding technology for a dry carbon dioxide absorbent for a fixed-bed reactor of a ship, which includes activated carbon and clay, with excellent formability and ease of manufacture for use in a fixed-bed reactor, and a method of manufacturing the same. In this way, in order to desorb carbon dioxide after adsorption at room temperature in the conventional carbon dioxide adsorption system, a "regeneration" process is essential, which involves depressurization to discharge carbon dioxide physically adsorbed on the adsorbent by a pressure difference or heating to release carbon dioxide physically/chemically adsorbed on the adsorbent. In addition, when adsorbing carbon dioxide again using the regenerated adsorbent, it is favorable to physically adsorb the same only by cooling to near room temperature. For the carbon dioxide adsorbent, heating and cooling have to be performed sequentially in the same reactor.

Hence, a dry carbon dioxide absorbent for a fixed-bed reactor of a ship, which includes regeneration of a carbon dioxide absorbent using exhaust gas waste heat of a ship, capable of effectively separating carbon dioxide after regeneration by generating steam using exhaust gas waste heat of a ship engine under the spatially limited conditions of a ship and directly applying the steam thus generated as a regeneration energy source, and a method of manufacturing the same, have not yet been presented.

### (Citation List)

### (Patent Literature)

(Patent Document 0001) Korean Patent Application Publication No. 10-2015-0127939
(Patent Document 0002) Korean Patent Application Publication No. 10-2013-0034993
(Patent Document 0003) Korean Patent Application Publication No. 10-2022-0146871
(Patent Document 0004) Korean Patent Application Publication No. 10-2015-0125880

### [Disclosure]

### [Technical Problem]

The present invention has been made keeping in mind the problems encountered in the related art, and an object of the present invention is to provide a dry carbon dioxide absorbent for a fixed-bed reactor of a ship, which is suitable for use in a fixed-bed reactor using exhaust gas waste heat of a ship, capable of effectively separating carbon dioxide after regeneration by generating steam using exhaust gas waste heat of a ship engine under the spatially limited conditions of a ship and directly applying the steam thus generated as a regeneration energy source, and which has excellent formability and ease of manufacture, and a method of manufacturing the same.

Another object of the present invention is to provide a dry carbon dioxide absorbent for a fixed-bed reactor of a ship, in which the support of the absorbent includes δ-Al₂O₃ and ZrO₂ and thus formability is superior to that of conventional absorbents, thereby manufacturing the absorbent in a predetermined shape, and a method of manufacturing the same.

Still another object of the present invention is to provide a dry carbon dioxide absorbent for a fixed-bed reactor of a ship, which includes activated carbon and clay and thus is durable, facilitates mass production, and is easy to manufacture, and a method of manufacturing the same.

### [Technical Solution]

In order to accomplish the above objects, the present invention provides a method of manufacturing a dry carbon dioxide absorbent for a fixed-bed reactor of a ship, including a first step of forming a mixed aqueous solution by mixing a carbon dioxide-absorbing active material and distilled water, a second step of preparing a slurry by mixing the mixed aqueous solution with a support and a matrix material, a third step of manufacturing solid particles having an average particle size of 50 µm to 100 µm by spray drying the slurry, a fourth step of producing a molded body by adding an additive to the solid particles followed by compression and/or injection molding, and a fifth step of manufacturing a dry absorbent by calcining the molding body at 500°C to 700°C for 5 to 7 hours, in which the active material and the distilled water are mixed in a mass ratio of 1.4-1.5:1.

Also, the carbon dioxide-absorbing active material may be potassium carbonate (K₂CO₃), the support may be δ-Al₂O₃ and/or ZrO₂, and the matrix material may be activated carbon and/or clay.

Also, the slurry may have a pH of 11 to 13 and a viscosity of 400 cP to 550 cP.

Also, drying the slurry may be performed at an inlet temperature of a spray dryer of 180 to 200°C and an outlet temperature of the spray dryer of 110 to 115°C for 60 minutes per 1 L of the slurry.

Also, the slurry may include 20 parts by weight to 45 parts by weight of potassium carbonate, 30 parts by weight to 70 parts by weight of δ-Al₂O₃, and 0 parts by weight to 40 parts by weight of ZrO₂, which are mixed.

Also, the slurry may include 2 to 4 parts by weight of activated carbon and 0 to 2 parts by weight of clay, which are mixed.

Also, the additive may be activated carbon and may be added in an amount of 2 to 4 parts by weight.

In addition, the present invention provides a system for capturing carbon dioxide from exhaust gas of a ship, including regeneration of a carbon dioxide adsorbent using exhaust gas waste heat of a ship, in which exhaust gas emitted from a ship engine 100 is supplied via a first line L1, a plurality of reactors 200 is filled with a carbon dioxide adsorbent to adsorb and remove exhaust gas containing carbon dioxide supplied from the first line, a second line L2 is branched to discharge the exhaust gas from which carbon dioxide is removed from the reactors, regeneration of the carbon dioxide adsorbent on which carbon dioxide is adsorbed is carried out through the exhaust gas of the ship engine and steam generated by heat exchange with the exhaust gas in a steam generator 300 connected to a third line L3, the desorbed carbon dioxide and the steam are separated into carbon dioxide and water in which the steam is condensed by heat exchange through seawater in a seawater heat exchanger 400 connected to a fourth line L4, and the carbon dioxide is captured by a carbon dioxide tank 700 and the water is recirculated to the steam generator via a fifth line L5, in which the adsorbent is a dry carbon dioxide absorbent.

The present invention may also be provided in the form of various combinations of the technical solution described above.

### [Advantageous Effects]

According to the present invention, a dry carbon dioxide absorbent for a fixed-bed reactor of a ship and a method of manufacturing the same enable effective manufacture of the absorbent in a predetermined shape because formability is superior to that of conventional absorbents.

In addition, the dry carbon dioxide absorbent can exhibit superior absorption capacity and regeneration performance. Furthermore, the dry carbon dioxide absorbent includes AC and clay and thus has the effects of being durable, facilitating mass production, and being easy to manufacture.

In addition, the dry carbon dioxide absorbent can exhibit superior long-term stability due to use of a support including δ-Al₂O₃ and ZrO₂.

### [Description of Drawings]

FIG. 1 is a flowchart showing a process of manufacturing an absorbent according to an embodiment of the present invention;
FIG. 2 is a graph showing absorption capacity of the absorbent for up to 5 cycles according to an embodiment of the present invention;
FIG. 3 shows SEM images of the absorbent according to an embodiment of the present invention;
FIG. 4 shows images of the absorbent according to an embodiment of the present invention that is molded;
FIG. 5 is a table showing composition and absorption capacity of the absorbent according to an embodiment of the present invention;

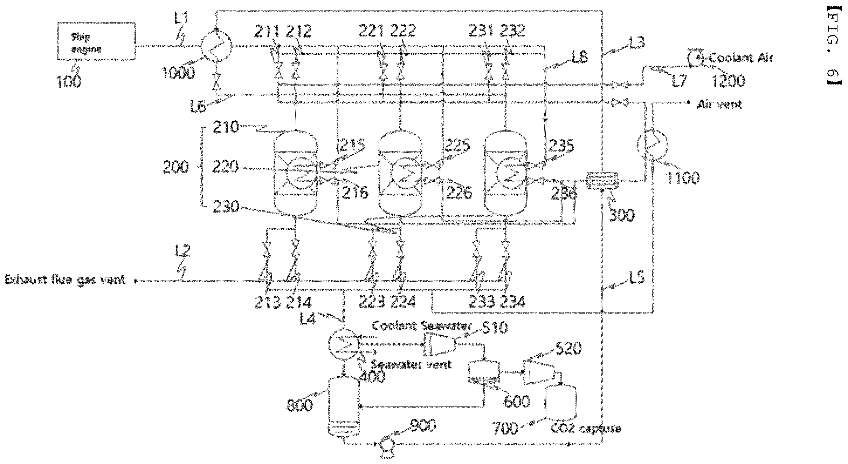

FIG. 6 shows a process diagram of a system for capturing carbon dioxide from exhaust gas of a ship, including regeneration of a carbon dioxide absorbent using exhaust gas waste heat of the ship, according to an embodiment of the present invention; and
FIG. 7 is a graph comparing destruction curves of a novel absorbent according to an embodiment of the present invention and a conventional absorbent.

### [Mode for Invention]

Hereinafter, embodiments of the present invention will be described in detail with reference to the appended drawings so as to easily perform the present invention by those having ordinary skill in the art to which the present invention pertains. However, in explaining the operating principle of preferred embodiments of the present invention in detail, if it is determined that a specific description of the related known functions or configurations may unnecessarily obscure the gist of the present invention, the detailed description thereof is omitted.

Also, the same reference numerals are used for parts that have similar functions and operations throughout the drawings. Herein, when a part is said to be connected to another part, this includes not only cases where it is directly connected, but also cases where it is indirectly connected with a further element interposed therebetween. Moreover, including any component does not exclude other components, unless stated otherwise, but means that other components may be further included.

Also, limitations or additions to any embodiment herein may be applied not only to a particular embodiment, but may also be applied equally to other embodiments.

Also, throughout the description and claims of the present invention, the singular includes the plural unless stated otherwise.

A detailed description will be given of the present invention with reference to the drawings.

A method of manufacturing a dry carbon dioxide absorbent for a fixed-bed reactor of a ship includes a first step of forming a mixed aqueous solution by mixing a carbon dioxide-absorbing active material with distilled water, a second step of preparing a slurry by mixing the mixed aqueous solution with a support and a matrix material, a third step of manufacturing solid particles having an average particle size of 50 µm to 100 µm by spray drying the slurry, a fourth step of producing a molded body by adding an additive to the solid particles followed by compression and/or injection molding, and a fifth step of manufacturing a dry absorbent by calcining the molded body at 500 to 700°C for 5 to 7 hours, in which the active material and the distilled water may be mixed in a mass ratio of 1.4-1.5:1.

In the present invention, the active material serves to efficiently capture and separate carbon dioxide from a gas stream by selective reaction with carbon dioxide. The type of active material includes potassium carbonate, potassium bicarbonate, and mixtures thereof, or precursors thereof that may be converted into the material described above, synthetic or natural raw materials may be used therefor, and the purity thereof may be 99% or higher, but the present invention is not limited thereto.

In one embodiment, the active material may be included in an amount of 30 to 40 wt% based on the total weight of the composition for a carbon dioxide absorbent. If the amount of the active material is less than 30 wt%, carbon dioxide absorption capacity may decrease, lowering capture efficiency. On the other hand, if the amount thereof exceeds 40 wt%, the active material cannot be efficiently utilized, the spherical shape of the absorbent may be deformed, and furthermore, the absorbent is likely to adhere to the structure in the absorption reactor due to an increase in water absorption, and physical properties (strength, packing density) thereof may deteriorate. In the present invention, the purity of the active material may be 98% or higher. For example, potassium carbonate may be included in an amount of 30 to 35 wt% based on the total weight of the composition for a carbon dioxide absorbent.

The support has to be able to increase usability of the active material by distributing the active material well in carbon dioxide absorbent particles, create a passage for efficient entry and exit (diffusion) of gas between the outside of the particles and the active material before and after reaction, and prevent agglomeration of particles, and simultaneously increase the reaction speed by facilitating adsorption and absorption of water necessary for reaction between the active material and carbon dioxide.

Taking into consideration the suppression of side reaction with potassium carbonate as the active ingredient, the support may include alpha-alumina, zirconium dioxide (ZrO₂), titanium dioxide (TiO₂), and zirconium dioxide with increased specific surface area. These raw materials serve to stabilize the active ingredient distributed in the support during calcination of the absorbent, thereby suppressing side reaction that may occur during the repeated cycle of carbon dioxide absorption and subsequent regeneration. Here, zirconium dioxide (ZrO₂) also serves to prevent performance degradation of the absorbent due to contact with air stream containing pollutants such as sulfur dioxide.

Alpha-alumina, which has a low specific surface area and therefore small water absorption capacity, may generate a problem with performance degradation and agglomeration of particles due to dissolution of the active material caused by excessive contact between the active material dispersed in the absorbent and water. To prevent this problem, titanium dioxide, which has a large specific surface area compared to alpha-alumina, zirconium dioxide, pseudo-boehmite, and zirconium dioxide with an increased specific surface area may be employed, alleviating dissolution of the active ingredient.

In one embodiment, alpha-alumina (α-alumina) may be included in an amount of 10 to 30 wt% based on the total weight of the composition for a carbon dioxide absorbent. When the amount thereof falls in the range described above, superior durability and stability of the absorbent may be exhibited, and dissolution of the active material may be prevented. If the amount of alpha-alumina that is included exceeds 30 wt%, performance degradation due to dissolution of the active ingredient may occur. For example, alpha-alumina may be included in an amount of 15 to 25 wt%.

In one embodiment, titanium dioxide may be included in an amount of 5 to 15 wt% based on the total weight of the composition for a carbon dioxide absorbent. If the amount of titanium dioxide that is included is less than 5 wt%, durability and stability of the support may deteriorate, whereas if the amount thereof exceeds 15 wt%, performance degradation due to dissolution of the active material may occur.

In one embodiment, zirconium dioxide may be included in an amount of 5 to 25 wt% based on the total weight of the composition for a carbon dioxide absorbent. If the amount of zirconium dioxide that is included is less than 5 wt%, durability and stability of the support may deteriorate, whereas if the amount thereof exceeds 25 wt%, performance degradation due to dissolution of the active material may occur.

In one embodiment, alpha-alumina (α-alumina) may be included in an amount of 10 to 30 wt% based on the total weight of the composition for a carbon dioxide absorbent. When the amount thereof falls in the range described above, superior durability and stability of the absorbent may be exhibited, and dissolution of the active material may be prevented. If the amount of alpha-alumina that is included exceeds 30 wt%, performance degradation due to dissolution of the active ingredient may occur. For example, alpha-alumina may be included in an amount of 15 to 25 wt%.

In one embodiment, titanium dioxide may be included in an amount of 5 to 15 wt% based on the total weight of the composition for a carbon dioxide absorbent. If the amount of titanium dioxide that is included is less than 5 wt%, durability and stability of the support may deteriorate, whereas if the amount thereof exceeds 15 wt%, performance degradation due to dissolution of the active material may occur.

In one embodiment, zirconium dioxide may be included in an amount of 5 to 25 wt% based on the total weight of the composition for a carbon dioxide absorbent. If the amount of zirconium dioxide that is included is less than 5 wt%, durability and stability of the support may deteriorate, whereas if the amount thereof exceeds 25 wt%, performance degradation due to dissolution of the active material may occur. In one embodiment, alpha-alumina may have a specific surface area of 5 to 50 m²/g, titanium dioxide may have a specific surface area of 25 to 200 m²/g, and zirconium dioxide may have a specific surface area of 10 to 100 m²/g. Under the specific surface area conditions described above, good mixing of the composition may be achieved, and the reaction speed may increase by facilitating adsorption and absorption of water necessary for reaction between the active material and carbon dioxide.

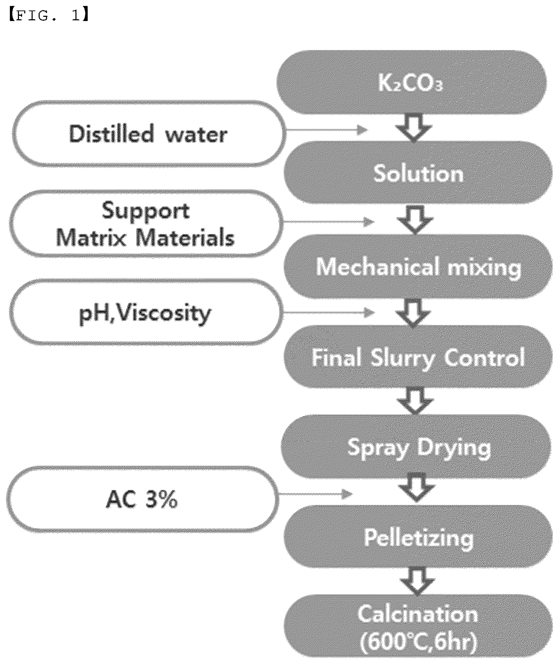

FIG. 1 is a flowchart showing the process of manufacturing an absorbent according to an embodiment of the present invention.

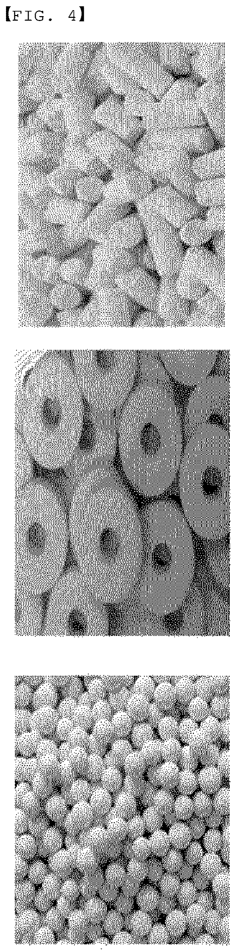

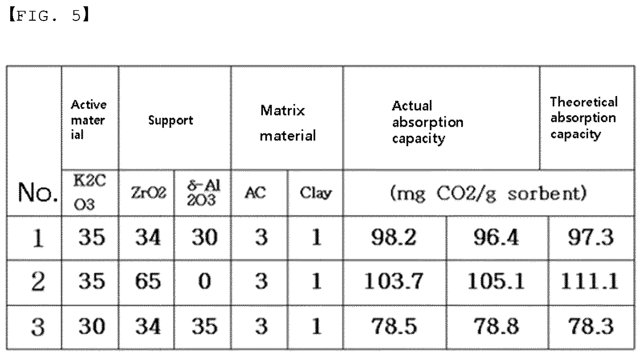

In the method of manufacturing an absorbent, a solution is prepared by mixing an active ingredient (K₂CO₃) and distilled water, and a support and a matrix material are mixed as shown in the composition table of FIG. 5 to afford a slurry with a predetermined pH and viscosity. The slurry is spray dried to obtain solid particles in the form of a powder with a size of 50 to 100 µm, and 3 wt% of activated carbon is added to the solid particles followed by compression or injection molding to produce a molded body in a shape shown in <FIG. 4>, which is then calcined at 600°C for 6 hours, thereby manufacturing an absorbent.

Also, the carbon dioxide-absorbing active material may be potassium carbonate (K₂CO₃), the support may be δ-Al₂O₃ and/or ZrO₂, and the matrix material may be activated carbon and/or clay.

The slurry may have a pH of 11 to 13 and a viscosity of 400 cP to 550 cP. Outside the pH and/or viscosity ranges described above, the absorbent efficiency may decrease.

Pulverization is performed using a mill for 14 hours or more, and the rotation speed of an atomizer is 7800 to 8200 rpm. The specific gravity of the slurry is maintained at 1.4 to 1.5 and the pH thereof is maintained at 11 to 13, and drying the slurry is performed at an inlet temperature of a spray dryer of 180 to 200°C and an outlet temperature of the spray dryer of 110 to 115°C for 60 minutes per 1 L of slurry.

When the slurry preparation and drying conditions fall outside the ranges described above, the efficiency of manufacturing an absorbent may decrease.

In one embodiment, an impregnation solution may include an aluminum salt, an iron salt, and sodium hydroxide. For example, the impregnation solution may be prepared by adding an aluminum salt, an iron salt, and sodium hydroxide to a solvent followed by mixing. For example, the solvent may include water.

In one embodiment, the impregnation solution may include an aluminum salt, an iron salt, and sodium hydroxide in a molar ratio of 1:2-4:8-10. When the molar ratio thereof falls in the range described above, the modification effect of bentonite may increase, so that effects of increasing the porosity and specific surface area of the carbon dioxide absorbent may become good.

In one embodiment, the impregnation solution may include the sum of the aluminum salt and the iron salt, sodium hydroxide, and a solvent in a weight ratio of 1:0.1-0.5:5-12. Under the conditions described above, the modification effect of bentonite may increase, so that effects of increasing the porosity and specific surface area of the carbon dioxide absorbent may become good.

In one embodiment, the impregnation solution may be prepared by stirring the components. Here, stirring may be performed for 4 hours or more. Stirring may be performed using a stirrer, an ultrasonic cleaner, or a bead mill. In one embodiment, the final pH of the impregnation solution after completion of stirring may be 3.5 to 4.5. Under the conditions described above, the modification effect of bentonite may increase, so that effects of increasing the porosity and specific surface area of the carbon dioxide absorbent may become good.

Washing and dehydration may be repeated until the pH of the mixture reaches 5 to 6. In one embodiment, a washing solution may include water. Dehydration may be performed using at least one of a centrifuge, a filter press, or natural filtration. After completion of washing and dehydration, the dehydrated mixture (particles) may be dried in an oven at 120°C for 16 hours or more, obtaining a dried product.

In one embodiment, the dried product may be calcined at 500°C for 2 hours or more, obtaining a calcined product.

Also, the slurry may include 20 parts by weight to 45 parts by weight of potassium carbonate, 30 parts by weight to 70 parts by weight of δ-Al₂O₃, and 0 parts by weight to 40 parts by weight of ZrO₂, which are mixed.

If the amount of potassium carbonate is less than 20 parts by weight, the resulting absorbent cannot function sufficiently, whereas if the amount thereof exceeds 45 parts by weight, it may be difficult to manufacture an absorbent.

In one embodiment of the third step, pulverization may be performed using a ball mill. In one embodiment, the particle size of the pulverized calcined particles may be 1 to 40 µm. Under the conditions described above, mixing of zirconium dioxide and effects of increasing the porosity and specific surface area of the absorbent may become good.

In one embodiment, zirconium dioxide may be included in an amount of 3 to 9 wt% based on the total weight of the composition for a carbon dioxide absorbent. When the amount thereof falls in the range described above, superior durability and stability of the support may be exhibited, effects of increasing the porosity and specific surface area of the carbon dioxide absorbent may become good, performance degradation of the absorbent may be prevented when in contact with gas containing pollutants, and dissolution of the active material may be prevented. For example, zirconium dioxide may be included in an amount of 3 to 9 wt%, for example 4 to 7.5 wt%. If the amount of zirconium dioxide that is included is less than 3 wt%, the effects of increasing the porosity and specific surface area of the absorbent may deteriorate, whereas if the amount thereof exceeds 9 wt%, the carbon dioxide absorption efficiency and wear resistance of the absorbent may deteriorate.

In one embodiment, zirconium dioxide may have a specific surface area of 40 to 150 m²/g. When the specific surface area thereof falls in the range described above, effects of increasing the porosity and specific surface area of the carbon dioxide absorbent may become good, performance degradation of the absorbent may be prevented when in contact with gas containing pollutants, and dissolution of the active material may be prevented. For example, modified bentonite may have a specific surface area of 40 to 150 m²/g.

Also, the slurry may include 2 to 4 parts by weight of activated carbon and 0 to 2 parts by weight of clay, which are mixed.

Also, the additive may be activated carbon and may be added in an amount of 2 to 4 parts by weight.

### (Examples)

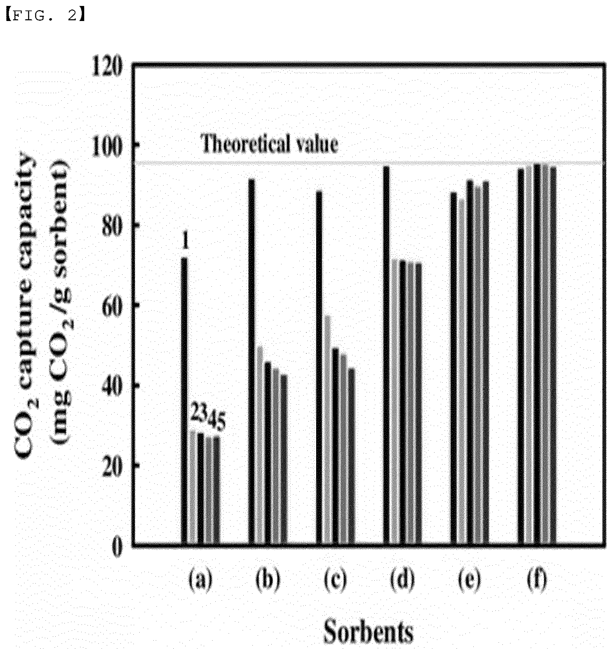

FIG. 2 is a graph showing the absorption capacity of an absorbent for up to 5 cycles according to an embodiment of the present invention.

The absorbent manufactured using K₂CO₃ as an active material and γ-Al₂O₃ as a support was tested for absorption capacity up to 5 cycles.

The present absorbent was manufactured by an impregnation process using 30 wt% of K₂CO₃ and a support such as (a) γ-AlOOH, (b) γ-Al₂O₃, (c) γ-Al₂O₃ (Aldrich), (d) δ-Al₂O₃, (e) α-Al₂O₃, and (f) α-Al₂O₃ (Aldrich).

Absorption reaction was carried out at 60°C in an atmosphere of 1 vol% of CO₂ and 9 vol% of H₂O, and regeneration reaction was carried out at 200°C in an atmosphere of N₂.

When using (a), (b), or (c), performance of the absorbent tended to decrease as the cycle was repeated. For (d) δ-Al₂O₃, a decrease in absorption capacity was observed compared to the initial absorption capacity, but after 2 cycles, absorption capacity was maintained at about 72% of the theoretical absorption capacity. When using (e) or (f) α-Al₂O₃ as the support, absorption capacity was maintained close to the theoretical absorption capacity even after repeated regeneration. The initial performance degradation rate of δ-Al₂O₃ is calculated to be 0.046, and it is expected to have higher absorption capacity than the reference absorption capacity (83.0 mg CO₂/g sorbent for 2 cycles) when used within 40 wt% as a support (based on 35 wt% of K₂CO₃).

For ZrO₂, there was almost no initial performance degradation, and even after repeated cycles of regeneration, the absorption capacity was similar to the theoretical absorption capacity, making it suitable as a support.

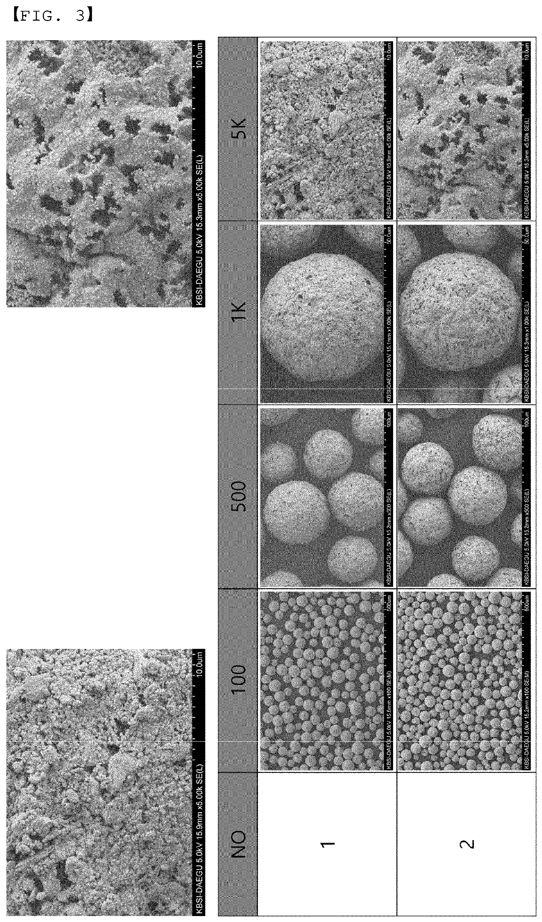

FIG. 3 shows SEM images of the absorbent according to an embodiment of the present invention.

Activated carbon is ignited at a temperature of 200°C or higher during calcination when manufacturing the absorbent, whereby the specific surface area of the support increases and dispersibility of the active ingredient is improved.

As dispersibility of the active ingredient is improved, the absorption speed increases. When the support includes Al₂O₃ and ZrO₂ and a small amount of matrix material is contained, an absorbent with high durability and without breakage after compression molding and calcination may be manufactured.

FIG. 3 shows SEM images at 5K magnification of the surface of the absorbent with activated carbon added. Activated carbon is ignited at a temperature of 200°C or higher during calcination when manufacturing the absorbent, whereby the specific surface area of the support may increase and dispersibility of the active ingredient may be improved, and pores may be observed in the surface thereof. Also, the absorption speed increases as the dispersibility of the active ingredient is improved.

The SEM images of absorbents 1 and 2 manufactured from the active material, the support, and the matrix material in ratios by wt% according to No. in the table of FIG. 5 are also shown. Measurements were made at magnifications of 100, 500, 1K, and 5K, and pores were observed in the surface at 5K. This is deemed to be because pores are generated due to ignition at a temperature of 200°C or higher in the calcination process during manufacture of the absorbent by the addition of 3 wt% of AC.

This increases the surface area of the support, improving dispersibility of the active material and ultimately increasing the absorption speed.

FIG. 4 shows images of the absorbent according to an embodiment of the present invention that is molded.

When a powder-type absorbent is used as a fixed-bed absorbent, it is not suitable due to problems of water adsorption and absorbent agglomeration, and an absorbent with a large surface area, at least a predetermined size, and a predetermined shape is suitable.

The present absorbent, having excellent formability, may be manufactured into a size of 5 to 10 mm. The shape of the absorbent is as shown in FIG. 4.

3 wt% of activated carbon is added to the solid particles manufactured by spray molding, followed by molding and then calcination at 600°C for 6 hours to obtain an absorbent having a predetermined shape. A molding machine such as a Marumerizer, Granulator, PELLETER DOUBLE, etc. may be used during molding.

FIG. 5 is a table showing the composition and absorption capacity of the absorbent according to an embodiment of the present invention.

The mixing conditions may be parts by weight or wt%.

When K₂CO₃ was used as the active material, the theoretical absorption capacity was calculated by calculating the performance degradation rate of each of the support and matrix material, which appears to have a similar trend to the actual absorption capacity.

Based on the absorption capacity calculation equation, the matrix material was added to increase mechanical strength and absorption speed.

In order to achieve this purpose, the present invention provides a system for capturing carbon dioxide from exhaust gas of a ship, including regeneration of a carbon dioxide adsorbent using exhaust gas waste heat of a ship, in which exhaust gas emitted from a ship engine 100 is supplied via a first line L1, a plurality of reactors 200 is filled with a carbon dioxide adsorbent to adsorb and remove exhaust gas containing carbon dioxide supplied from the first line, a second line L2 is branched to discharge the exhaust gas from which carbon dioxide is removed from the reactors, regeneration of the carbon dioxide adsorbent on which carbon dioxide is adsorbed is carried out through the exhaust gas of the ship engine and steam generated by heat exchange with the exhaust gas in a steam generator 300 connected to a third line L3, the desorbed carbon dioxide and the steam are separated into carbon dioxide and water in which the steam is condensed by heat exchange through seawater in a seawater heat exchanger 400 connected to a fourth line L4, and the carbon dioxide is captured by a carbon dioxide tank 700 and the water is recirculated to the steam generator via a fifth line L5, in which the adsorbent is a dry carbon dioxide absorbent.

The reactors may include at least three column-type reactors 210, 220, 230 spaced apart from each other, including a reactor connected to the first line and configured to adsorb carbon dioxide from exhaust gas containing carbon dioxide, a reactor connected to a sixth line L6 and configured to receive the supplied steam and desorb carbon dioxide from the carbon dioxide adsorbent on which carbon dioxide is adsorbed, and a reactor configured to cool the carbon dioxide adsorbent through air supplied from a fan 1200 of a seventh line L7.

The steam may be generated in the steam generator by heat exchange between water supplied via the fifth line and exhaust gas having waste heat supplied via an eighth line L8, and may be secondarily heat-exchanged with the exhaust gas in a steam heat exchanger 1000 between the third line and the sixth line.

The exhaust gas may be fed into the reactors through selective opening or closing of inlet valves 211, 212, 221, 222, 231, 232 and outlet valves 213, 214, 223, 224, 233, 234 provided to the reactors, so that carbon dioxide adsorption may proceed, and may be supplied as a heat exchange source for regeneration of the carbon dioxide adsorbent in the reactors via heat exchange valves 215, 216, 225, 226, 235, 236.

The carbon dioxide separated in the seawater heat exchanger may be primarily compressed by a first compressor 510 and supplied to a condenser 600 so that the condensed water is separated, and may be secondarily compressed by a second compressor 520 and stored in the carbon dioxide tank.

The water condensed in the seawater heat exchanger and the water condensed in the condenser may be stored in a water storage tank 800, and may be supplied to the steam generator via a pump 900 depending on the conditions of the system.

The exhaust gas fed to the reactor for adsorption described above may be supplied at 25°C to 300°C under 0 bar to 5 bar, and the exhaust gas waste heat fed to the reactor for desorption described above may be supplied at 150°C to 600°C under 0 bar to 5 bar. Thereby, regeneration of the adsorbent may be performed in the temperature range of 150°C to 600°C.

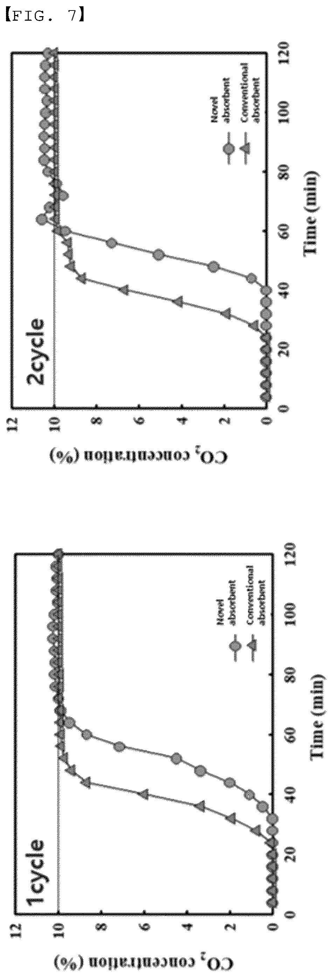

FIG. 7 is a graph comparing the destruction curves of a novel absorbent according to an embodiment of the present invention and a conventional absorbent.

In the conventional absorbent, materials that cause side reaction, such as an antifoaming agent, a dispersant, calcium silicate, etc., are used as raw materials, and as a result, when reaction is repeated, the active material becomes inactive and absorption capacity decreases, which is undesirable.

The absorbent of the present invention has superior regeneration performance using raw materials that do not cause side reaction, and is economical because it uses fewer raw materials than the conventional absorbent. Also, it can be confirmed that the speed and absorption capacity of the absorbent according to the present invention are improved compared to the conventional absorbent.

The destruction time increased 1.6 times from 24 minutes to 40 minutes, and the absorption speed also improved.

Various applications and modifications are possible within the scope of the present invention based on the contents described above by those having ordinary skill in the art to which the present invention pertains.

Although representative embodiments of the present invention have been described in detail above, those skilled in the art will appreciate that various modifications can be made to the aforementioned embodiments without departing from the scope of the present invention.

Therefore, the scope of the present invention should not be limited to the described embodiments, but should be defined by the following claims and equivalents thereto.

### (Description of reference numerals)

100: ship engine
200, 210, 220, 230: reactor
211, 212, 221, 222, 231, 232: inlet valve
213, 214, 223, 224, 233, 234: outlet valve
215, 216, 225, 226, 235, 236: heat exchange valve
300: steam generator
400: seawater heat exchanger
510: first compressor
520: second compressor
600: condenser
700: carbon dioxide tank
800: water storage tank
900: pump
1000: steam heat exchanger
1100: air heat exchanger
1200: fan
L1: first line
L2: second line
L3: third line
L4: fourth line
L5: fifth line
L6: sixth line
L7: seventh line
L8: eighth line

## Claims

1. A method of manufacturing a dry carbon dioxide absorbent, comprising:
a first step of forming a mixed aqueous solution by mixing a carbon dioxide-absorbing active material and distilled water;
a second step of preparing a slurry by mixing the mixed aqueous solution with a support and a matrix material;
a third step of manufacturing solid particles having an average particle size of 50 µm to 100 µm by spray drying the slurry;
a fourth step of producing a molded body by adding an additive to the solid particles followed by compression and/or injection molding; and
a fifth step of manufacturing a dry absorbent by calcining the molding body at 500°C to 700°C for 5 to 7 hours,
wherein the active material and the distilled water are mixed in a mass ratio of 1.4-1.5:1.

2. The method according to claim 1, wherein:
the carbon dioxide-absorbing active material is potassium carbonate (K₂CO₃),
the support is δ-Al₂O₃ and/or ZrO₂, and
the matrix material is activated carbon and/or clay.

3. The method according to claim 1, wherein the slurry has a pH of 11 to 13 and a viscosity of 400 cP to 550 cP.

4. The method according to claim 1, wherein drying the slurry is performed at an inlet temperature of a spray dryer of 180 to 200°C and an outlet temperature of the spray dryer of 110 to 115°C for 60 minutes per 1 L of the slurry.

5. The method according to claim 2, wherein the slurry comprises 20 parts by weight to 45 parts by weight of potassium carbonate, 30 parts by weight to 70 parts by weight of δ-Al₂O₃, and 0 parts by weight to 40 parts by weight of ZrO₂, which are mixed.

6. The method according to claim 2, wherein the slurry comprises 2 to 4 parts by weight of activated carbon and 0 to 2 parts by weight of clay, which are mixed.

7. The method according to claim 1, wherein the additive is activated carbon and is added in an amount of 2 to 4 parts by weight.

8. A dry carbon dioxide absorbent manufactured by the method according to any one of claims 1 to 7.

9. A system for capturing carbon dioxide from exhaust gas of a ship, comprising regeneration of a carbon dioxide adsorbent using exhaust gas waste heat of a ship,
wherein exhaust gas emitted from a ship engine (100) is supplied via a first line (L1),
a plurality of reactors (200) is filled with a carbon dioxide adsorbent to adsorb and remove exhaust gas containing carbon dioxide supplied from the first line,
a second line (L2) is branched to discharge the exhaust gas from which carbon dioxide is removed from the reactors,
regeneration of the carbon dioxide adsorbent on which carbon dioxide is adsorbed is carried out through the exhaust gas of the ship engine and steam generated by heat exchange with the exhaust gas in a steam generator (300) connected to a third line (L3),
the desorbed carbon dioxide and the steam are separated into carbon dioxide and water in which the steam is condensed by heat exchange through seawater in a seawater heat exchanger (400) connected to a fourth line (L4), and
the carbon dioxide is captured by a carbon dioxide tank (700) and the water is recirculated to the steam generator via a fifth line (L5),
in which the adsorbent is the dry carbon dioxide absorbent according to claim 8.
